# DEMANDE DE BREVET EUROPEEN

(11) **EP 0 829 394 A1**
(43) Date de publication de la demande: **18.03.1998**
(21) Numéro de dépôt: 97402036.4
(22) Date de dépôt: 01.09.1997
(51) Int. Cl.: B60R 16/02, G06F 15/16

(54) **Procédé et dispositif de synchronisation du fonctionnement d'au moins deux calculateurs d'un système électronique embarqué à bord d'un véhicule automobile**

(30) Priorité: 17.09.1996 FR 9611332
(71) Demandeur: AUTOMOBILES PEUGEOT, 75116 Paris (FR); AUTOMOBILES CITROEN, 92200 Neuilly-sur-Seine (FR)
(72) Inventeur: Loubeyre, Yves, 92380 Garches (FR)
(74) Mandataire: Habasque, Etienne Joel Jean-François

(57) **Abrégé**

Ce dispositif, dans lequel l'un des calculateurs est un calculateur maître (2) et l'autre, un calculateur esclave (3,4,5,6), raccordés par un réseau de transmission d'informations multiplexé (7), est caractérisé en ce que le calculateur maître (2) est adapté pour engendrer un message de requête de synchronisation contenant un nombre synchronisateur, calculer un premier code de synchronisation à partir de ce nombre synchronisateur et émettre ce message sur le réseau, en ce que le calculateur esclave est adapté pour calculer à partir de ce nombre synchronisateur, un second code de synchronisation, engendrer un message de confirmation de synchronisation contenant ce second code et émettre ce message sur le réseau, et en ce que le calculateur maître est adapté pour comparer les premier et second codes pour valider ou non son fonctionnement.

## Description

La présente invention concerne un procédé et un dispositif de synchronisation du fonctionnement d'au moins deux calculateurs d'un système électronique embarqué à bord d'un véhicule automobile.

Plus particulièrement, la présente invention concerne un procédé et un dispositif de synchronisation du fonctionnement d'au moins deux calculateurs, dont l'un est un calculateur maître et l'autre un calculateur esclave, raccordés par un réseau de transmission d'informations multiplexé.

Les progrès de la technologie électronique ont permis, par l'utilisation de circuits électroniques numériques de plus en plus performants, d'apporter beaucoup plus de souplesse à la réalisation des systèmes électroniques par exemple embarqués à bord des véhicules automobiles.

Cependant, l'introduction croissante de logiciel dans les équipements de ces véhicules, s'accompagne de nouveaux problèmes liés à la nature spécifique du produit logiciel et à son élaboration.

Chaque véhicule automobile possède déjà un nombre de plus en plus important de calculateurs électroniques remplissant un nombre croissant de fonctions toutes très différentes les unes des autres.

Avec l'intégration des réseaux de transmission d'informations multiplexés dans les véhicules, il est apparu indispensable de faire communiquer ces calculateurs entre eux.

Dans certains cas de fonctionnement, il est en effet nécessaire que les calculateurs échangent des informations pendant une phase d'initialisation, afin de permettre un fonctionnement correct du véhicule.

Cependant, ceci pose un certain nombre de problèmes, car cette procédure de synchronisation doit être mise en oeuvre dans un temps le plus court possible et doit permettre d'assurer un transfert d'informations de façon transparente pour le conducteur du véhicule avant qu'il ne fasse fonctionner celui-ci.

Le but de l'invention est donc de résoudre ces problèmes.

A cet effet, l'invention a pour objet un procédé de synchronisation du fonctionnement d'au moins deux calculateurs d'un système électronique embarqué à bord d'un véhicule automobile, dont l'un est un calculateur maître et l'autre, un calculateur esclave, raccordés par un réseau de transmission d'informations multiplexé, caractérisé en ce qu'il comporte les étapes suivantes :
a) initialisation du fonctionnement des calculateurs maître et esclave,
b) génération par le calculateur maître, d'un message de requête de synchronisation contenant un nombre synchronisateur et émission sur le réseau de ce message de requête de synchronisation,
c) calcul d'un premier code de synchronisation par le calculateur maître à partir de ce nombre synchronisateur,
d) calcul d'un second code de synchronisation par le calculateur esclave à partir de ce nombre synchronisateur contenu dans le message de requête de synchronisation émis par le calculateur maître sur le réseau multiplexé,
e) génération par le calculateur esclave, d'un message de confirmation de synchronisation contenant le second code de synchronisation, et émission de celui-ci sur le réseau,
f) comparaison par le calculateur maître du premier code de synchronisation et du second code de synchronisation, pour valider son fonctionnement en cas de correspondance entre ces premier et second codes ou l'invalider en cas de discordance entre ceux-ci.

Avantageusement, le calculateur maître est adapté pour émettre de façon périodique un message de requête de synchronisation sur le réseau, en cas de discordance entre les premier et second codes de synchronisation ou en cas d'absence de message de confirmation de synchronisation.

Selon un autre aspect, l'invention a également pour objet un dispositif pour la mise en oeuvre de ce procédé.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure générale d'un système électronique embarqué à bord d'un véhicule automobile;
- la Fig.2 illustre de façon schématique les échanges d'informations entre un calculateur maître et un calculateur esclave, pour la mise en oeuvre d'un procédé selon l'invention;
- les Figs.3, 4, 5, 6 et 7 illustrent différents exemples d'échanges d'informations entre un calculateur maître et un calculateur esclave;
- la Fig.8 illustre les différents états de fonctionnement d'un calculateur;
- la Fig.9 représente un tableau correspondant des états représentés sur la figure 8; et
- la Fig.10 représente un organigramme illustrant le fonctionnement d'un procédé selon l'invention.

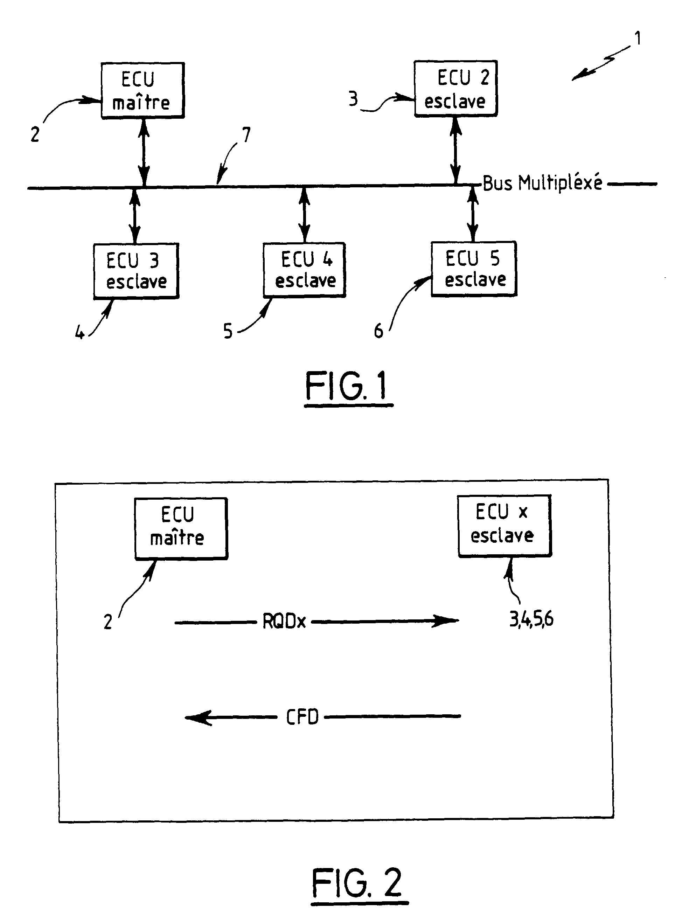

On a représenté sur la figure 1, un système électronique embarqué à bord d'un véhicule automobile, ce système étant désigné par la référence générale 1 sur ces figures.

Un tel système comporte plusieurs calculateurs qui seront également appelés ECU par la suite, désignés par les références générales 2,3,4,5 et 6, et qui sont raccordés les uns aux autres par l'intermédiaire d'un réseau de transmission d'informations multiplexé, constitué par exemple par un bus multiplexé de transmission de données, désigné par la référence générale 7 sur cette figure.

Dans un tel système, l'un des calculateurs est un calculateur maître, tandis que les autres calculateurs sont des calculateurs esclaves.

C'est ainsi par exemple que dans le cas représenté sur la figure 1, le calculateur maître est le calculateur désigné par la référence générale 2, tandis que les autres calculateurs à savoir les calculateurs ECU 2,3,4 et 5, désignés par les références générales 3,4,5, et 6 respectivement, sont des calculateurs esclaves.

A titre d'exemple, le calculateur maître 2 peut être un calculateur de contrôle du fonctionnement du moteur du véhicule, tandis que les autres calculateurs sont par exemple des calculateurs de gestion du fonctionnement de la boîte de vitesses automatique du véhicule, de gestion du fonctionnement des moyens de suspension de celui-ci, de gestion des informations issues d'un combiné d'instrumentation du véhicule et de contrôle dynamique du véhicule.

Il va de soi bien entendu, que d'autres calculateurs, tels que par exemple le calculateur d'anti-démarrage codé du véhicule, peuvent également être intégrés dans un tel système.

Ces calculateurs ayant des fonctionalités très différentes les unes par rapport aux autres, ils sont donc mis sous tension selon des procédures différentes et qui leur sont propres.

Il est donc impossible de connaître a priori celui qui sera prêt le premier.

Cependant, il est nécessaire d'envoyer le plus rapidement possible un message du calculateur maître vers les calculateurs esclaves afin de contrôler leur état, pour autoriser un fonctionnement normal du véhicule.

Ceci est réalisé comme on peut le voir sur la figure 2, par un échange d'informations entre le calculateur maître 2 et les calculateurs esclaves 3,4,5 et 6, le calculateur maître 2 émettant en direction de chaque calculateur esclave x, un message de requête de synchronisation, tandis que chaque calculateur esclave répond en émettant un message de confirmation de synchronisation, sur le réseau de transmission.

Ces messages sont désignés par les références RQDx et CFD respectivement, sur cette figure 2.

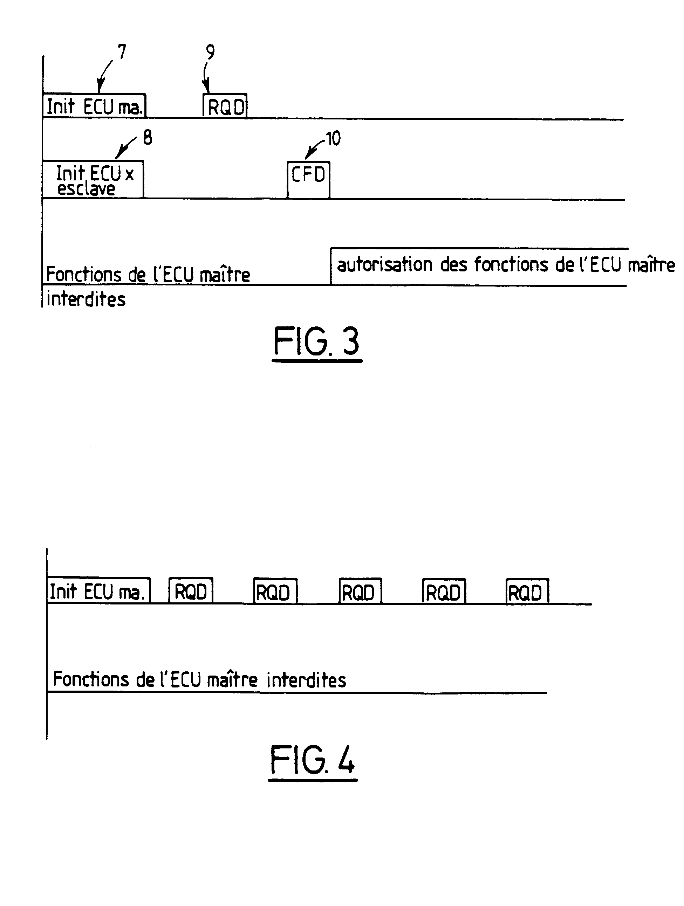

En fait, le procédé de synchronisation selon l'invention comporte un certain nombre d'étapes, dont certaines sont illustrées sur la figure 3 par exemple.

Dans un premier temps, les calculateurs maître et esclave, lors de leur mise sous tension, mettent en oeuvre une étape d'initialisation de ceux-ci, comme cela est illustré par les références 7 et 8 sur cette figure 3.

Une fois cette étape d'initialisation terminée, le calculateur maître 2 engendre un message de requête de synchronisation RQDx contenant un nombre synchronisateur et émet sur le réseau, ce message de requête de synchronisation RQD, désigné par la référence générale 9 sur cette figure. Le nombre synchronisateur est engendré par ce calculateur maître selon une procédure classique.

Pendant ce temps, les fonctions du calculateur maître sont interdites.

De plus, le calculateur maître calcule un premier code de synchronisation à partir de ce nombre synchronisateur.

Ce message de requête de synchronisation RQD émis sur le réseau par le calculateur maître, est reçu par un calculateur esclave destinataire, qui calcule un second code de synchronisation à partir du nombre synchronisateur contenu dans le message de requête de synchronisation RQD émis par le calculateur maître.

En réponse, le calculateur esclave engendre un message de confirmation de synchronisation CFD contenant le second code de synchronisation et l'émet sur le réseau à destination du calculateur maître.

Ce message de confirmation de synchronisation CFD est désigné par la référence générale 10 sur cette figure 3.

Le calculateur maître procède ensuite à une comparaison du premier code de synchronisation, calculé par lui-même à partir du nombre synchronisateur, et du second code de synchronisation contenu dans le message de confirmation de synchronisation CFD en provenance du calculateur esclave, pour valider son fonctionnement en cas de correspondance entre ces premier et second codes ou l'invalider en cas de discordance entre ceux-ci.

C'est ainsi par exemple qu'en cas de correspondance entre ces premier et second codes, le calculateur maître valide ses propres fonctions comme cela est illustré sur cette figure 3.

Dans le cas contraire, c'est-à-dire en cas de discordance entre les premier et second codes de synchronisation, les fonctions du calculateur maître restent interdites, ce calculateur maître restant bloqué et dans l'attente d'une nouvelle séquence de synchronisation.

Le calculateur maître est alors adapté pour émettre de façon périodique, un message de requête de synchronisation RQD sur le réseau, en cas de discordance entre les premier et second codes de synchronisation ou en cas d'absence de message de confirmation de synchronisation CFD.

La figure 4 illustre le cas de l'absence de message de confirmation de synchronisation CFD en réponse de la part du calculateur esclave, de sorte que le calculateur maître, après sa phase d'initialisation, émet de façon périodique un message de requête de synchronisation RQD sur le réseau.

L'émission périodique de ces différents messages de requête de synchronisation peut être associée ou non à un changement du nombre synchronisateur permettant de changer le premier code de synchronisation à chaque émission d'un tel message de requête de synchronisation par ce calculateur maître.

Un tel message peut par exemple être émis toutes les 10 ms sur le réseau, par le calculateur maître.

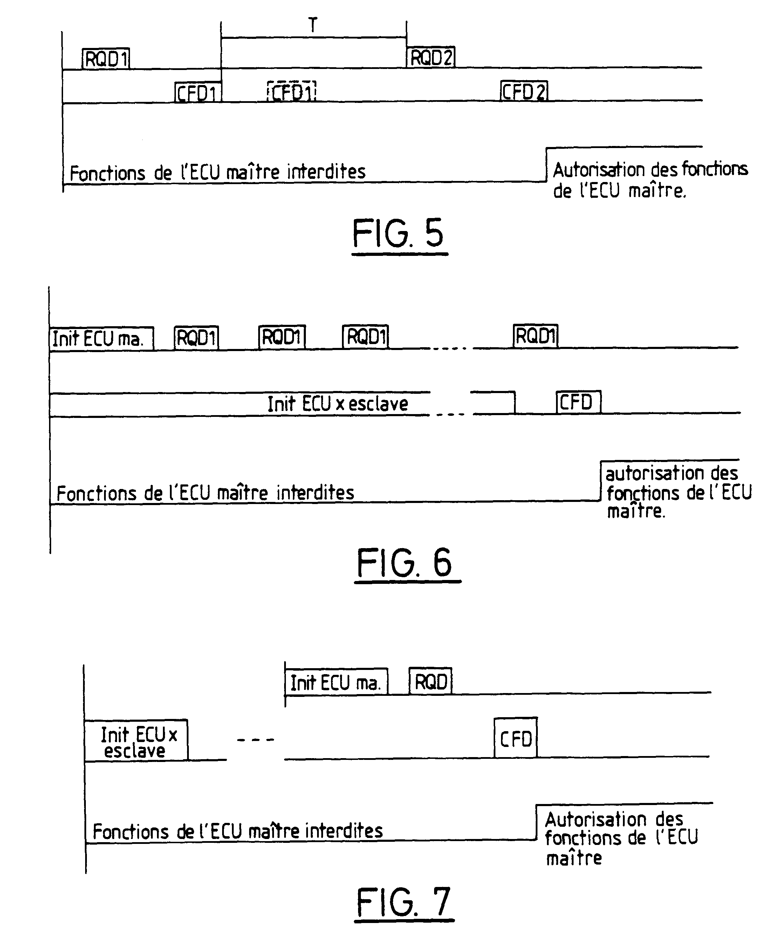

Un tel fonctionnement peut également être mis en oeuvre lorsque les premier et second codes de synchronisation calculés par les calculateurs maître et esclave ne correspondent pas, comme cela est illustré sur la figure 5.

En effet, si après l'émission d'un message de requête de synchronisation RQD1, le calculateur maître reçoit de la part d'un calculateur esclave un message de confirmation de synchronisation CFD1, contenant un second code de synchronisation qui ne correspond pas au premier code de synchronisation, le calculateur maître, après une période de temps prédéterminée T, est adapté pour émettre un nouveau message de requête de synchronisation RQD2, en utilisant un nouveau nombre synchronisateur pour calculer un nouveau premier code de synchronisation différent de celui utilisé lors de l'émission précédente RQD1.

Dans ce cas, le calculateur esclave émet sur le réseau un nouveau message de confirmation de synchronisation CFD2, contenant un nouveau second code de synchronisation, calculé à partir du nouveau nombre synchronisateur.

On constate également sur cette figure, qu'il est possible qu'après une mauvaise réponse de ce calculateur esclave, celui-ci engendre très rapidement un second message de confirmation de synchronisation (en pointillés sur cette figure 5), le calculateur maître devant alors ignorer celui-ci.

On conçoit également que lors de la mise sous tension du système électronique du véhicule, deux cas de fonctionnement peuvent être envisagés, ces cas de fonctionnement concernant le cas où le calculateur maître s'initialise en premier et le cas où le calculateur esclave s'initialise en premier.

Si le calculateur maître s'initialise en premier (Fig.6), celui-ci émet des messages de requête de synchronisation RQD, par exemple toutes les 10 ms sur le réseau.

Etant donné qu'il est prêt le premier, il ne reçoit une réponse CFD d'un calculateur esclave que lorsque ce dernier a terminé sa propre initialisation, comme cela est illustré sur la figure 6.

Le calculateur maître n'arrête alors l'émission des messages de requête de synchronisation RQD1 que lorsqu'il a reçu une réponse correcte, c'est-à-dire un message de confirmation de synchronisation CFD, avec un second code de synchronisation correspondant au premier, de ce calculateur esclave.

Dans le cas contraire, c'est-à-dire si le calculateur esclave s'initialise en premier, comme on peut le voir sur la figure 7, le calculateur maître émet un message de requête de synchronisation RQD et reçoit une réponse CFD très rapidement après l'envoi du premier message de requête de synchronisation, étant donné que le calculateur esclave s'est initialisé avant lui.

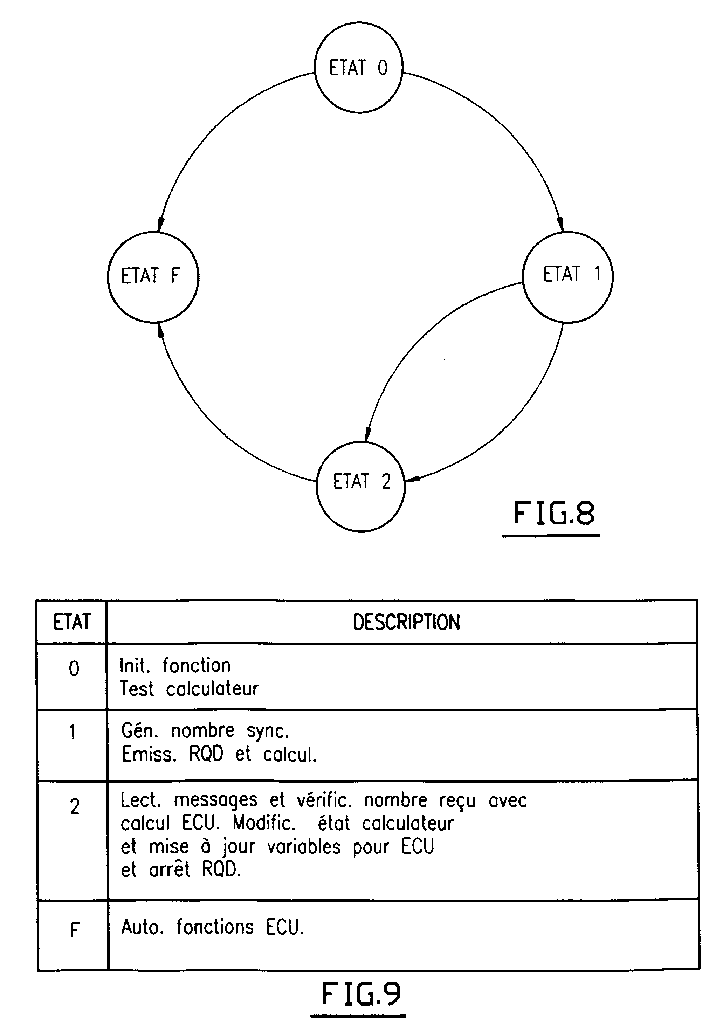

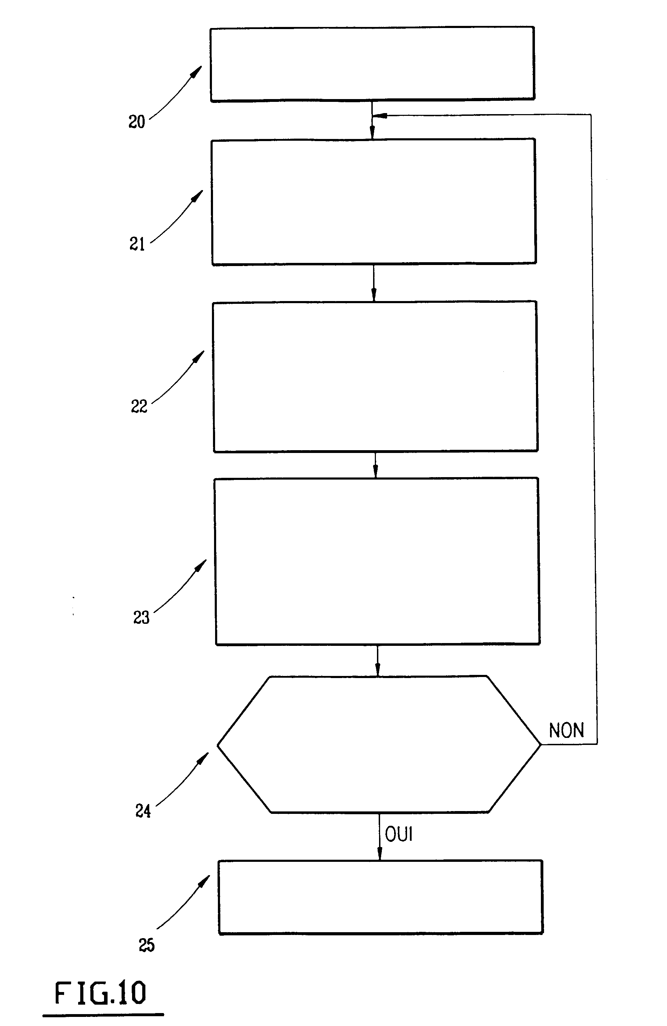

Le fonctionnement de ce système est illustré en regard des figures 8 et 9, sur lesquelles l'état 0 correspond à l'initialisation de la fonction et au test de l'état du calculateur maître à sa mise sous tension.

L'état 1 correspond à la génération d'un nombre synchronisateur, au calcul du premier code de synchronisation et à l'émission périodique du message de requête de synchronisation RQD sur le réseau.

L'état 2 correspond à la lecture des messages sur le réseau multiplexé et à la vérification des premier et second codes de synchronisation.

De plus, cet état correspond également à la modification de l'état du calculateur et à la mise à jour des variables pour le fonctionnement de ce calculateur maître et à l'arrêt de l'émission des messages de requête de synchronisation RQD.

L'état F correspond quant à lui à l'autorisation des fonctions du calculateur maître.

On a représenté sur la figure 10, un organigramme illustrant un tel fonctionnement.

Sur cet organigramme, l'étape 20 correspond à l'étape d'initialisation des calculateurs maître et esclave.

L'étape 21 correspond à la génération par le calculateur maître d'un message de requête de synchronisation RQD contenant un nombre synchronisateur et après cette étape de génération en 21, est prévue, en 22, une étape d'émission par le calculateur du message de requête de synchronisation RQD sur le réseau et le calcul du premier code de synchronisation.

Ce message émis sur le réseau est reçu par un calculateur esclave qui, lors de l'étape 23, calcule le second code de synchronisation à partir du nombre synchronisateur contenu dans le message de requête de synchronisation RQD émis par le calculateur maître, puis engendre et émet sur le réseau un message de confirmation de synchronisation CFD contenant ce second code de synchronisation.

Après cette étape d'émission sur le réseau, en 24, le calculateur maître est adapté pour comparer les premier et second codes de synchronisation afin de valider en 25, le fonctionnement du calculateur maître en cas de correspondance entre ces deux codes ou invalider celui-ci en cas de discordance entre ceux-ci et recommencer une opération d'émission d'un message de requête de synchronisation sur le réseau à partir de l'étape 21, en utilisant ou non un nouveau nombre synchronisateur, afin d'engendrer des messages de requête de synchronisation différents ou non à chaque émission de messages.

Il va de soi bien entendu que différentes variantes de réalisation de ce procédé et de ce dispositif peuvent être envisagées et que ce procédé peut être mis en oeuvre par exemple en temps masqué, lors de l'activation d'un organe fonctionnel d'un véhicule automobile consécutivement à la mise sous tension du système électronique embarqué à bord de celui-ci.

Ceci est par exemple le cas lors de l'activation des moyens de démarrage du véhicule, cette procédure de synchronisation des calculateurs s'opérant en temps masqué, lors de la manoeuvre par exemple de la clé de contact du véhicule.

## Revendications

1. Procédé de synchronisation du fonctionnement d'au moins deux calculateurs d'un système électronique embarqué à bord d'un véhicule automobile, dont l'un (2) est un calculateur maître et l'autre (3,4,5,6), est un calculateur esclave, raccordés par un réseau de transmission d'informations multiplexé (7), caractérisé en ce qu'il comporte les étapes suivantes :
a) initialisation (en 20) du fonctionnement des calculateurs maître et esclave,
b) génération (en 21) par le calculateur maître, d'un message de requête de synchronisation (RQD) contenant un nombre synchronisateur et émission (en 22) sur le réseau (7) de ce message de requête de synchronisation,
c) calcul (en 22) d'un premier code de synchronisation par le calculateur maître (2) à partir de ce nombre synchronisateur,
d) calcul (en 23) d'un second code de synchronisation par le calculateur esclave (3,4,5,6) à partir de ce nombre synchronisateur contenu dans le message de requête de synchronisation (RDQ) émis par le calculateur maître (2) sur le réseau multiplexé (7),
e) génération (en 23) par le calculateur esclave, d'un message de confirmation de synchronisation (CFD) contenant le second code de synchronisation et émission de celui-ci sur le réseau (7),
f) comparaison (en 24) par le calculateur maître (2) du premier code de synchronisation et du second code de synchronisation, pour valider (en 25) son fonctionnement en cas de correspondance entre ses premier et second codes ou l'invalider en cas de discordance entre ceux-ci.

2. Procédé selon la revendication 1, caractérisé en ce que le calculateur maître (2) est adapté pour émettre de façon périodique un message de requête de synchronisation (RQD) sur le réseau (7), en cas de discordance entre les premier et second codes de synchronisation ou en cas d'absence de message de confirmation de synchronisation (CFD).

3. Procédé selon la revendication 2, caractérisé en ce que le calculateur maître (2) est adapté pour engendrer un nouveau message en utilisant un nouveau nombre synchronisateur à chaque émission d'un message de requête de synchronisation sur le réseau.

4. Procédé selon la revendication 2 ou 3, caractérisé en ce que le calculateur maître (2) est adapté pour émettre un message de requête de synchronisation (RQD) toutes les 10 ms sur le réseau.

5. Dispositif de synchronisation du fonctionnement d'au moins deux calculateurs d'un système électronique embarqué à bord d'un véhicule automobile pour la mise en oeuvre d'un procédé selon l'une quelconque des revendications précédentes.
